Europäisches Patentamt

European Patent Office

Office européen des brevets

(19)

(11) Numéro de publication: **0 172 109**
**A1**

# (12) DEMANDE DE BREVET EUROPEEN

(21) Numéro de dépôt: **85401607.8**

(22) Date de dépôt: **06.08.85**

(51) Int. Cl.⁴: **G 06 K 7/14**

(30) Priorité: **10.08.84 FR 8412680**

(43) Date de publication de la demande:
**19.02.86 Bulletin 86/8**

(84) Etats contractants désignés:
**DE GB NL**

(71) Demandeur: **THOMSON-CSF**
**173, Boulevard Haussmann**
**F-75379 Paris Cedex 08(FR)**

(72) Inventeur: **Chautemps, Jacques**
**THOMSON-CSF SCPI -173, bld Haussmann**
**F-75379 Paris Cedex 08(FR)**

(72) Inventeur: **Coutures, Jean-Louis**
**THOMSON-CSF SCPI -173, bld Haussmann**
**F-75379 Paris Cedex 08(FR)**

(74) Mandataire: **Ruellan-Lemonnier, Brigitte et al,**
**THOMSON-CSF SCPI 173, boulevard Haussmann**
**F-75379 Paris Cedex 08(FR)**

(54) **Procédé de détection de codes-barres et dispositif pour la mise en oeuvre du procédé.**

(57) Le procédé de détection de codes constitués par des barres de hauteur H et de largeur D présentant des défauts de hauteur A consiste à faire la somme es signaux issus des détecteurs ($d_1$, $d_2$, $d_3$ ou $d'_1$, $d'_2$, $d'_3$ ...) de même rang appartenant à au moins deux barrettes (1, 2) de N détecteurs présentant un pas (p) inférieur ou égal à D/2, les barrettes (1, 2) étant positionnées prependiculairement aux codes (C, C') de telle sorte qu'au moins une (h) des distances entre les barrettes soit supérieure à A, puis à comparer le signal-somme à un seuil de décision de manière à obtenir un signal de présence ou d'absence de codes en éliminant les défauts.

La présente invention permet d'utiliser des codes-barres générés à partir de lettres majuscules.

EP 0 172 109 A1

./...

FIG_1-a

FIG_1-b

Niveau blanc

Signaux issus de 1

Niveau noir

FIG_1-c

Signaux issus de 2

FIG_1-d

Signaux somme

Seuil décision

FIG_1-e

Signal de détection

## PROCEDE DE DETECTION DE CODES-BARRES ET DISPOSITIF POUR LA MISE EN OEUVRE DU PROCEDE

La présente invention concerne un procédé de détection de codes-barres ainsi qu'un dispositif pour la mise en oeuvre de ce procédé.

Les codes-barres sont constitués par une suite ordonnée et codée de barres de hauteur H et de largeur D déterminées ou d'absence de barres. Ce type de codes est utilisé pour marquer des objets tels que des objets postaux, des chèques dans le domaine bancaire ou des objets similaires, qui doivent être ensuite manipulés, c'est à dire triès, verifiés, rangés, etc.

Le marquage des objets par des codes-barres est en général réalisé à l'aide de machines d'inscription de codes-barres de type particulier. Or, notamment pour des raisons d'économie, il est intéressant de pouvoir générer les codes-barres en utilisant certaines lettres majuscules de machines à écrire standards. Dans ce cas, on utilise uniquement les traits verticaux constituant la lettre, les autres traïts, c'est-à-dire les traits horizontaux ou curvilignes étant considérés comme des défauts et donc éliminés.

Toutefois, les procédés de détection de codes barres et les têtes de lecture actuellement utilisés ne permettent pas l'utilisation des lettres-majuscules pour générer les codes-barres.

La présente invention a donc pour but de remédier à cet inconvénient en proposant un nouveau procédé de détection de codes-barres.

En conséquence, la présente invention a pour objet un procédé de détection de codes constitués par des barres de hauteur H et de largeur D présentant des défauts de hauteur A, caractérisé en ce qu'il consiste à faire la somme des signaux issus de détecteurs de même rang appartenant à au moins deux barrettes de N détecteurs présentant un pas inférieur ou égal à D/2, les barrettes étant positionnées perpendiculairement aux codes pour qu'au moins une des distances entre les barrettes soit supérieure à A, puis à comparer le signal somme à un seuil de décision de manière à obtenir un signal de présence ou d'absence de codes en éliminant les défauts.

Ce procédé est utilisé, en particulier, pour détecter des codes-barres générés à partir de lettres majuscules. Toutefois, il peut aussi être utilisé lors de la détection de codes-barres inscrits par les machines d'incription de codes-barres de type usuel. Dans ce cas, il permet d'éliminer, lors de la détection, des défauts présents sur les codes tels que des barres horizontales ou des taches de dimensions verticales inférieures à une dimension donnée.

Pour permettre une détection correcte de la présence d'un code-barre, le seuil de décision est au plus égal à 50 % du signal-somme obtenu lorsque tous les détecteurs de même rang détectent un niveau blanc correspondant à l'absence de code et de défaut, le niveau noir étant pris comme niveau zéro.

De préférence, le seuil de décision est compris entre 35 et 45 % du signal-somme, de manière à prendre en compte le niveau du blanc constitué par le fond sur lequel est inscrit le code-barre ainsi que la différence de sensibilité des détecteurs.

La présente invention concerne aussi un dispositif pour la mise en oeuvre du procédé ci-dessus. Ce dispositif est caractérisé en ce qu'il comporte au moins deux barrettes de N détecteurs présentant un pas inférieur ou égal à D/2, les barrettes étant positionnées perpendiculairement aux codes pour qu'au moins une des distances entre les barrettes soit supérieure à A, des moyens pour sommer et lire les signaux issus des détecteurs de même rang et des moyens pour comparer les signaux-somme à un seuil de décision et donner en sortie un signal de présence ou d'absence de codes en éliminant les défauts.

D'autres caractéristiques et avantages de la présente invention apparaîtront à la lecture de la description de divers modes de réalisation faite ci-après avec référence aux dessins ci-annexés dans lesquels :

- les figures la à le sont respectivement un schéma expliquant le procédé de détection de la présente invention et des diagrammes des différents signaux obtenus,

- la figure 2 est une représentation schématique d'un premier mode de réalisation d'un dispositif de détection conforme à la présente invention,

- la figure 3 est une représentation d'un mode de réalisation pratique du dispositif de la figure 2,

- la figure 4 est une représentation schématique d'un deuxième mode de réalisation d'un dispositif de détection conforme à la présente invention,

- la figure 5 est une représentation schématique d'un troisième mode de réalisation d'un dispositif de détection conforme à la présente invention, et

- la figure 6 est une représentation schématique d'un quatrième mode de réalisation d'un dispositif de détection conforme à la présente invention.

Sur les figures, les mêmes références désignent les mêmes éléments. Toutefois, pour des raisons de clarté, les cotes et proportions des divers éléments n'ont pas été respectées.

Le procédé de détection de codes-barres conforme à la présente invention sera expliqué de manière détaillée en se référant plus particulièrement à la figure la sur laquelle on a représenté un premier code C généré à partir d'un H et un second code C' généré à partir d'un L. Dans ce cas, les traits verticaux présentant une hauteur H et une largeur D déterminées constituent les codes-barres proprement dits tandis que les traits horizontaux I qui présentent une hauteur A sont considérés comme des défauts et doivent être éliminés lors de la détection.

Pour détecter uniquement les traits verticaux de hauteur H et de largeur D, on utilise au moins deux barrettes 1, 2 de N détecteurs $d_1$, $d_2$...$d_N$, $d'_1$, $d'_2$, ... $d'_N$ positionnées perpendiculairement aux codes-barres. La distance d entre les deux barrettes 1,2 de détecteurs est choisie pour être supérieure à la hauteur A des défauts de manière à ce qu'ils ne soient détectés que par une seule barrette. D'autre part, la distance d doit répondre à l'équation suivante

$$d + 2h + 2y < H$$

dans laquelle h est la hauteur d'un détecteur, et y est l'erreur maximum de positionnement entre les axes horizontaux des codes et des deux lignes de barrettes.

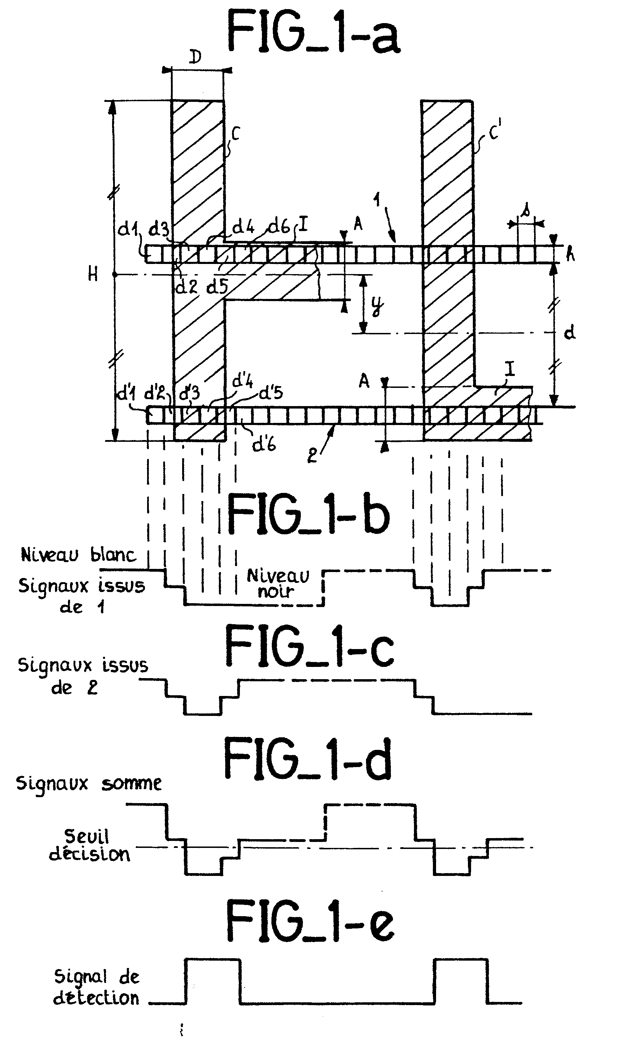

D'autre part, le pas p des détecteurs est choisi pour que $p < D/2$ de sorte qu'au moins un détecteur $d_3$, $d'_3$ d'une barrette détecte un niveau noir en cas de présence de code. Dans le mode de réalisation représenté à la figure 1a, p a été choisi égal à D/3.

Conformément au procédé de la présente invention, on réalise la sommation des signaux issus des deux barrettes 1 et 2.

Ainsi, en examinant de manière plus spécifique les signaux détectés par chaque barrette dans le cas de la figure 1a, on voit que pour la première barrette 1, le détecteur $d_1$ détecte un niveau blanc, le détecteur $d_2$ détecte un niveau gris intermédiaire et les détecteurs $d_3$, $d_4$, $d_5$, $d_6$...détectent un niveau noir, car elles détectent la présence du code C et du défaut I. Pour la seconde barrette 2, le détecteur $d'_1$ détecte un niveau gris, le détecteur $d'_3$ détecte un niveau noir, le détecteur $d'_4$ détecte un niveau gris et les détecteurs $d'_5$ et $d'_6$ détectent un niveau blanc. On obtient donc respectivement les signaux représentés sur la partie gauche des figures 1b et 1c. De même, en ce qui concerne la détection du code C', on obtient les signaux représentés sur la partie droite des figures 1b et 1c.

Lorsque l'on réalise la sommation des signaux ci-dessus, on obtient le signal représenté à la figure 1d. Ce signal-somme est comparé à un seuil de décision de manière à obtenir un signal de détection présentant un niveau zéro en cas d'absence de code, à savoir niveau blanc ou présence uniquement de défauts, et un niveau "1" en cas de présence de code. Le signal de détection est représenté à la figure 1e.

Comme représenté sur la figure 1d, le seuil de décision est choisi pour être au plus égal à 50 % du signal-somme correspondant à la somme de deux niveaux blancs. De préférence, le seuil de décision est choisi entre 35 et 45 % dudit signal-somme, en fonction de la variation de sensibilité et de la qualité des détecteurs.

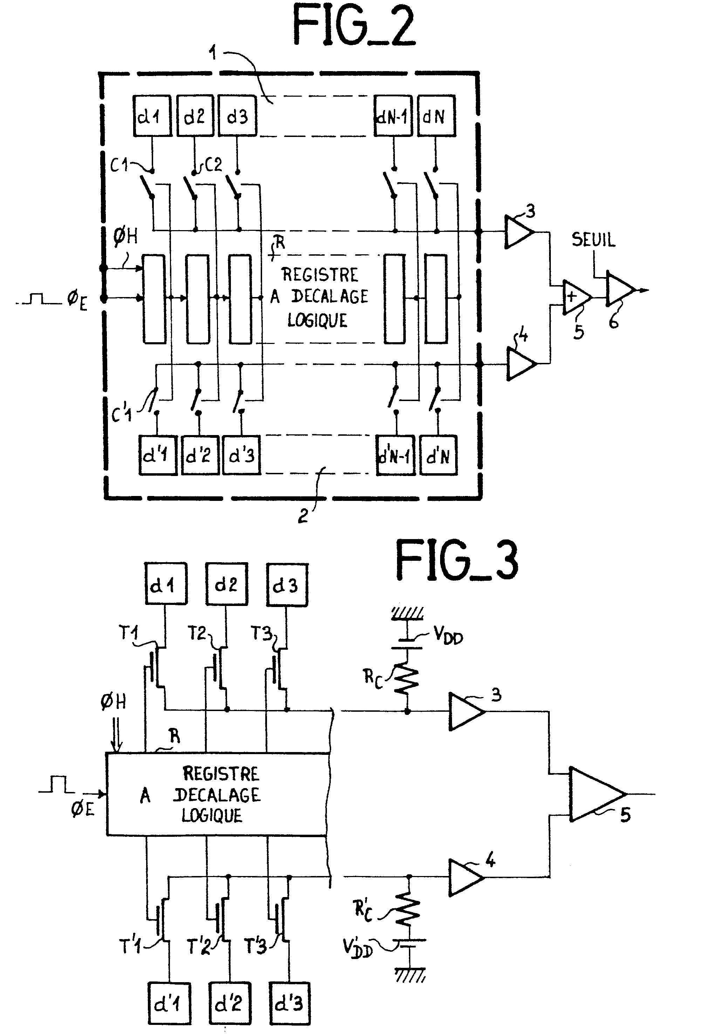

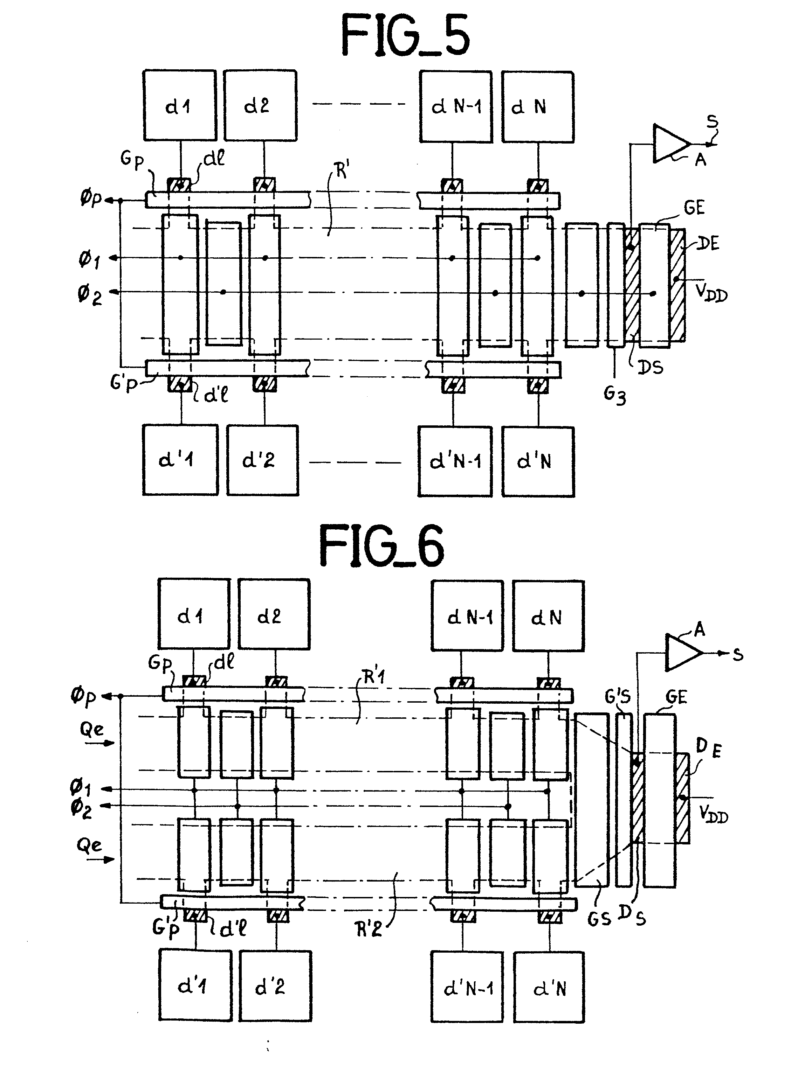

On décrira maintenant, avec référence aux figures 2 à 6, différents modes de réalisation d'un dispositif de détection de codes-barres permettant la mise en oeuvre du procédé de la présente invention. Ces dispositifs peuvent être classés en deux catégories, à savoir les dispositifs effectuant séquentiellement la lecture en courant des signaux issus des détecteurs et les dispositifs effectuant simultanément la lecture en charge des signaux issus des détecteurs. Les figures 2 à 4 concernent des dispositifs de la première catégorie tandis que les figures 5 et 6 concernent des dispositifs de la seconde catégorie.

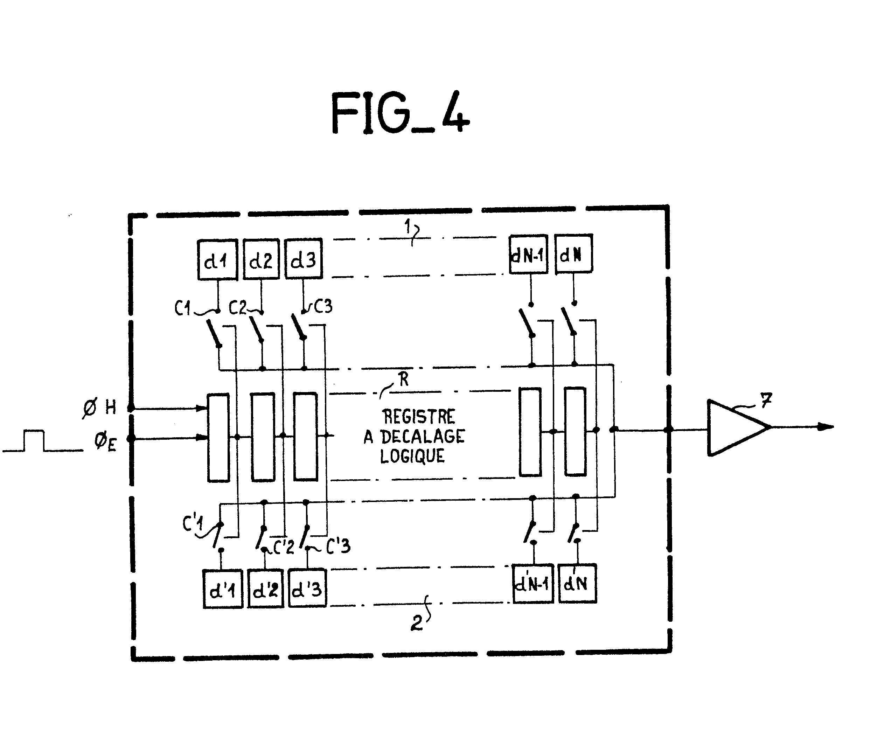

Dans le mode de réalisation des figures 2 et 3, les détecteurs $d_1$ à $d_N$ de la première barrette 1 sont connectés chacun par l'intermédiaire d'un commutateur $C_1$ à $C_N$ à une ligne de sortie connectée à un premier amplificateur courant/tension 3 et les détecteurs $d'_1$ à $d'_N$ de la deuxième barrette 2 sont connectés chacun par l'intermédiaire d'un commutateur $C'_1$ à $C'_N$ à une ligne de sortie connectée à un deuxième amplificateur courant/tension 4. Les sorties des deux amplificateurs 3 et 4 sont connectées aux entrées d'un additionneur 5 dont la sortie est envoyée sur une entrée d'un dispositif de comparaison constitué, par exemple, par un amplificateur différentiel dont l'autre entrée reçoit le signal correspondant au seuil de décision.

D'autre part, les commutateurs $C_1$ à $C_N$ et $C'_1$ à $C'_N$ sont connectés respectivement aux N sorties d'un registre à décalage logique R à entrée série et sorties parallèles, les connexions étant réalisées de telle sorte que les commutateurs de même rang soient connectés à la même sortie. Ainsi, lorsqu'une impulsion $\phi_E$ se décale dans le registre R sous l'effet de l'horloge $\phi_H$, elle ferme séquentiellement les commutateurs de même rang, permettant la lecture successive des signaux issus des détecteurs de même rang en sortie des deux amplificateurs 3 et 4. Ces signaux sont ensuite additionnés dans l'additionneur 5 puis comparés au seuil dans l'amplificateur différentiel 6. Le signal obtenu en sortie de l'amplificateur différentiel est donc le signal de détection de présence ou d'absence de codes représenté à la figure 1e.

Comme représenté sur la figure 3, les commutateurs $C_1$ à $C_N$ et $C'_1$ à $C'_N$ sont, de préférence, réalisés par des transistors MOS $T_1$ à $T_N$ et $T'_1$ à $T'_N$ dont une des électrodes est reliée à une tension continue $V_{DD}$, $V'_{DD}$ par l'intermédiaire d'une résistance de charge $R_C$, $R'_C$. L'autre électrode de chaque transistor MOS est reliée à un détecteur et la grille de chaque transistor MOS est reliée à une sortie du registre R comme mentionné ci-dessus. Ainsi lorsqu'une impulsion est appliquée sur la grille des transistors de même rang, ceux-ci sont rendus passant, ce qui provoque la lecture des détecteurs correspondants, sinon les transistors MOS sont bloqués.

Le mode de réalisation de la figure 4 est assez semblable à celui de la figure 2. La différence entre les deux modes de réalisation réside dans le fait que tous les commutateurs $C_1$ à $C_N$ et $C'_1$ à $C'_N$ sont connectés à la même ligne de sortie réalisant la sommation et la lecture en courant des signaux issus des détecteurs de même rang, ce qui supprime l'additionneur et nécessite un seul amplificateur courant/tension 7. Dans ce cas aussi, les commutateurs peuvent être réalisés par des transistors MOS.

Dans les modes de réalisation des figures 5 et 6, les signaux issus des détecteurs sont lus et sommés sous forme de paquets de charge en utilisant des registres à décalage de type CCD (pour charge coupled device en langue anglaise).

Ainsi dans le mode de réalisation de la figure 5, on utilise un seul registre R' à décalage à transfert de charge à N entrées parallèles et à sortie série, pour réaliser la sommation des charges détectées par les deux barrettes 1 et 2 de N détecteurs.

De manière plus spécifique, chaque détecteur $d_1$ à $d_N$ de la première barrette est relié par l'intermédiaire d'une diode de lecture $d_l$ qui peut être facultative et d'une grille de passage $G_p$ connectée

à un potentiel $\phi_p$ à l'entrée de l'étage de même rang du registre à décalage. De même chaque détecteur $d'_1$ à $d'_N$ de la deuxième barrette est relié par l'intermédiaire d'une diode de lecture $d'_1$ qui peut être facultative et d'une grille de passage $G'_p$ connectée au même potentiel $\phi_p$ à l'étage de même rang du registre à décalage.

Le registre à décalage à transfert de charge R' est un registre biphasé. En conséquence, chaque étage est constitué par un couple d'électrodes relié à un signal de commande $\phi_1$ et par un couple d'électrodes relié à un signal de commande $\phi_2$. Chaque couple d'électrodes est constitué par une électrode de stockage et une électrode de transfert. La dissymétrie dans les potentiels de surface nécessaire pour rendre le transfert unilatéral est réalisée, par exemple, par une surépaisseur d'oxyde ou par une implantation d'impuretés de même type que le substrat. Il est évident pour l'homme de l'art que d'autres types de registres à décalage à transfert de charge peuvent être utilisés.

La sortie du registre R' est reliée à un étage de lecture charge-tension de type connu. Dans le mode de réalisation représenté à la figure 5, il s'agit d'un étage de lecture réalisant une lecture destructive sur diode flottante. Cet étage de lecture est constitué essentiellement d'une grille de passage $G_S$ et d'une diode de lecture $D_S$ qui est reliée à un amplificateur A. Cette diode $D_S$ est préchargée par une grille $G_E$ reliée au signal de commande $\phi_2$ et une diode $D_E$ reliée à la tension continue $V_{DD}$.

Ainsi, avec le dispositif ci-dessus, lorsque $\phi_p$ est au niveau haut, les charges détectées par les détecteurs $d_1$ à $d_N$ et $d'_1$ à $d'_N$ sont transférées simultanément dans les étages correspondants du registre R' où les charges détectées par les détecteurs de même rang s'additionnent. Ainsi, les charges détectées par $d_1$ et $d'_1$ s'additionnent dans le premier étage de R', les charges détectées par $d_2$ et $d'_2$ s'additionnent dans le second étage et ainsi de suite.

Ensuite, sous la commande de $\phi_1$ et $\phi_2$, les charges sont transférées séquentiellement vers l'étage de lecture pour donner en sortie les signaux-somme S qui sont ensuite comparés au seuil de

détection dans un étage de comparaison non représenté.

Selon un autre mode de réalisation représenté à la figure 6, chaque barrette 1,2 de détecteurs $d_1$ à $d_N$ et $d'_1$ à $d'_N$ est associée à un registre à décalage à transfert de charge $R'_1$, $R'_2$ à entrées parallèles et sortie série comportant N étages. De manière plus spécifique, chaque détecteur d'une barrette est relié par l'intermédiaire d'une diode de lecture $d_1$ ou $d'_1$ qui peut être facultative et d'une grille de passage $G_p$, $G'_p$ à un étage d'un registre $R'_1$ ou $R'_2$. Les deux grilles de passage sont reliées au même potentiel $\phi_p$. D'autre part, les registres à décalage à transfert de charge $R'_1$ ou $R'_2$ sont de structure identique à celle du registre à décalage à transfert de charge R'. Ils sont commandés par les mêmes signaux de commande $\phi_1$ et $\phi_2$.

Les deux registres $R'_1$ et $R'_2$ sont connectés en sortie à un étage de lecture commun qui effectue la sommation des charges issues des étages de même rang des deux registres et la transformation charge-courant. Cet étage de lecture réalise une lecture destructive sur diode flottante. Il comporte une première grille de stockage $G_S$ réalisant la sommation des charges, une grille de passage $G'_S$, et une diode de lecture $D_S$ reliée à un amplificateur A donnant en sortie les signaux-somme S. La diode de lecture $D_S$ est préchargée par une grille $G_E$ et une diode $D_E$ reliée à la tension continue $V_{DD}$.

D'autre part, pour améliorer la résolution du signal, on peut utiliser, avec le mode de réalisation de la figure 6, une charge d'entrainement $Q_e$ qui s'additionne à chaque charge-signal lors du transfert détecteur vers l'étage du registre CCD. Cette charge d'entrainement $Q_e$ est injectée dans chaque étage des registres à décalage $R'_1$ et $R'_2$ à partir d'un étage d'injection non représenté. Cet étage est constitué de manière classique par une diode et des grilles de passage.

Lorsqu'on utilise une charge d'entrainement $Q_e$, celle-ci est tout d'abord injectée dans chaque étage des registres à décalage pendant le temps d'intégration des charges correspondant à la lecture des codes. Une fois l'intégration réalisée, le potentiel $\phi_p$ des grilles $G_p$ et $G'_p$ est porté à un niveau haut alors que le potentiel de commande $\phi_1$ des registres $R'_1$ et $R'_2$ se trouve au niveau bas. Ainsi la charge d'entrainement $Q_e$ est transférée vers les diodes $d_1$ et $d'_1$ et sous les grilles $G_p$ et $G'_p$ où elle vient s'ajouter respectivement à la charge-signal issue des détecteurs $d_1$ à $d_N$ ou $d'_1$ à $d'_N$. Ensuite, l'ensemble des charges $Q_e + Q_S$ est transféré vers l'étage correspondant des registres $R'_1$ et $R'_2$ lorsque $\phi_1$ passe à un niveau haut. Les ensembles $Q_e + Q_S$ sont ensuite transférés vers l'étage de lecture où ils sont sommés et transformés en tension pour donner les signaux-somme qui sont ensuite comparés au seuil de détection.

L'utilisation d'une charge d'entrainement permet d'améliorer le transfert du signal vers le registre à transfert de charge. Elle permet de contrôler le niveau et la résolution du signal de sortie.

Les différents dispositifs décrits ci-dessus présentent l'avantage d'être facilement intégrables sur un même substrat semiconducteur. Ce substrat peut être du silicium de type p ou de type n, de l'arséniure de gallium ou tout substrat semiconducteur similaire. De préférence, les détecteurs sont des photodiodes. Toutefois, on peut envisager d'utiliser des photo MOS ou d'autres détecteurs photosensibles.

Avec les modes de réalisation décrits ci-dessus, on obtient des signaux-somme qui, après comparaison avec un seuil de décision, donnent un signal de présence ou d'absence de codes en éliminant les défauts.

En fait, le choix du mode de réalisation à utiliser en pratique dépend de divers critères tels que le pas de répétition des détecteurs, le type d'intégration, le nombre de détecteurs par barrette.

Ainsi, si le pas de répétition est grand, à savoir supérieur à 100 μm, on utilise de préférence les dispositifs avec registres d'adressage logiques. Toutefois, si le pas de répétition est petit, à savoir inférieur à 30 μm, on utilise les dispositifs avec registres CCD.

D'autre part, si la fréquence de transfert ou d'adressage est élevée, à savoir supérieure à 2 MHz, on utilise les dispositifs avec registres CCD.

# REVENDICATIONS

1. Procédé de détection de codes constitués par des barres de hauteur H et de largeur D présentant des défauts de hauteur A, caractérisé en ce qu'il consiste à faire la somme des signaux issus de détecteurs ($d_1$ à $d_N$ ou $d'_1$ à $d'_N$) de même rang appartenant à au moins deux barrettes (1, 2) de N détecteurs présentant un pas (p) inférieur ou égal à D/2, les barrettes étant positionnées perpendiculairement aux codes (C, C') de telle sorte qu'au moins une (h) des distances entre les barrettes soit supérieure à A, puis à comparer le signal-somme à un seuil de décision de manière à obtenir un signal de présence ou d'absence de codes en éliminant les défauts.

2. Procédé de détection selon la revendication 1, caractérisé en ce que le seuil de décision est au plus égal à 50 % du signal-somme obtenu lorsque tous les détecteurs de même rang détectent un niveau blanc correspondant à l'absence de code et de défaut.

3. Procédé de détection selon la revendication 2, caractérisé en ce que le seuil de décision est compris entre 35 et 45 % du signal-somme.

4. Dispositif pour la mise en oeuvre du procédé selon l'une quelconque des revendications 1 à 3, caractérisé en ce qu'il comporte au moins deux barrettes (1, 2) de N détecteurs ($d_1$ à $d_N$ et $d'_1$ à $d'_N$) présentant un pas inférieur ou égal à D/2, les barrettes (1, 2) étant positionnées perpendiculairement aux codes de telle sorte qu'au moins une des distances entre les barrettes (1, 2) soit supérieure à A, des moyens pour sommer et lire les signaux issus des détecteurs de même rang et des moyens pour comparer les signaux-somme à un seuil de décision et donner en sortie un signal de présence ou d'absence de codes en éliminant les défauts.

5. Dispositif selon la revendication 4, caractérisé en ce que les détecteurs ($d_1$ à $d_N$, $d'_1$ à $d'_N$) sont des photodiodes ou des photo MOS.

6. Dispositif selon l'une quelconque des revendications 3 et 4, caractérisé en ce que les moyens pour sommer et lire les signaux issus des détecteurs de même rang sont constitués par des rangées de commutateurs ($C_1$ à $C_N$ et $C'_1$ à $C'_N$) associées aux barrettes (1, 2) de détecteurs, chaque commutateur d'une rangée étant connecté respectivement à un détecteur et à une ligne de sortie connectée par l'intermédiaire d'un amplificateur courant/tension (3, 4) à l'une des entrées d'un sommateur (5) et par un registre (R) à décalage logique adressant séquentiellement les commutateurs de même rang sur les différentes rangées.

7. Dispositif selon l'une quelconque des revendications 3 et 4, caractérisé en ce que les moyens pour sommer et lire les signaux issus des détecteurs de même rang sont constitués par des rangées de commutateurs ($C_1$ à $C_N$, $C'_1$ à $C'_N$) associées aux barrettes (1, 2) de détecteurs, chaque commutateur d'une rangée étant connecté respectivement à un détecteur et à une ligne de sortie commune connectée à un amplificateur courant/tension (7) et par un registre (R) à décalage logique adressant séquentiellement les commutateurs de même rang sur les différentes rangées.

8. Dispositif selon l'une quelconque des revendications 6 et 7, caractérisé en ce que les commutateurs sont réalisés par des transistors MOS ($T_1$ à $T_N$ et $T'_1$ à $T'_N$).

9. Dispositif selon l'une quelconque des revendications 3 et 4, caractérisé en ce que les moyens pour sommer et lire les signaux issus des détecteurs de même rang sont constitués par un registre (R') à décalage à transfert de charge de N étages à entrées parallèles et sortie série et par un étage ($G_S$, $D_S$, $G_E$, $D_E$) de conversion charge/tension prévu en sortie du registre à décalage à transfert de charge, chaque étage du registre (R') étant connecté aux détecteurs ($d_1$ à $d_N$ et $d'_1$ à $d'_N$) de même rang des différentes barrettes (1, 2).

10. Dispositif selon l'une quelconque des revendications 3 et 4 caractérisé en ce que les moyens pour sommer et lire les signaux issus des détecteurs de même rang sont constitués par des registres ($R'_1$, $R'_2$) à décalage à transfert de charge à entrées parallèles et sortie série de N étages, associés chacun à une barrette (1, 2) de détecteurs et par un étage ($G_S$, $G'_S$, $D_S$, $G_E$, $D_E$) de sommation et de conversion charge/tension commun prévu en sortie des registres à décalage à transfert de charge, les differents registres à décalage à transfert de charge étant commandés par les mêmes signaux de commande ($\emptyset_1$, $\emptyset_2$).

11. Dispositif selon la revendication 10, caractérisé en ce qu'il comporte de plus des moyens pour injecter dans les différents étages du ou des registres à décalage à transfert de charge une charge d'entrainement ($Q_e$).

12. Dispositif selon la revendication 11, caractérisé en ce que le moyen pour injecter la charge d'entrainement est constitué par un étage d'injection de charge injectant en série la charge d'entrainement dans les étages des registres ($R'_1$, $R'_2$) à décalage à transfert de charge.

0172109

# FIG_1-a

# FIG_1-b

Niveau blanc

Signaux issus
de 1

Niveau
noir

# FIG_1-c

Signaux issus
de 2

# FIG_1-d

Signaux somme

Seuil
décision

# FIG_1-e

Signal de
détection

# FIG_2

- d1  d2  d3 ... dN-1  dN
- C1  C2
- ØH
- ØE
- R
- REGISTRE A DECALAGE LOGIQUE
- 3
- SEUIL
- +  5
- 6
- 4
- C'1
- d'1  d'2  d'3 ... d'N-1  d'N
- 1
- 2

# FIG_3

- d1  d2  d3
- T1  T2  T3
- ØH
- R
- ØE
- REGISTRE A DECALAGE LOGIQUE
- $V_{DD}$
- $R_C$
- 3
- 5
- 4
- T'1  T'2  T'3
- $R'_C$
- $V'_{DD}$
- d'1  d'2  d'3

# FIG_4

0172109

# FIG_5

# FIG_6

Office européen
des brevets

**RAPPORT DE RECHERCHE EUROPEENNE**

EP 85 40 1607

## DOCUMENTS CONSIDERES COMME PERTINENTS

| Catégorie | Citation du document avec indication. en cas de besoin. des parties pertinentes | Revendication concernee | CLASSEMENT DE LA DEMANDE (Int Cl 4) |
|---|---|---|---|
| A | US-A-3 351 906 (STAAT DER NEDERLANDEN) * En entier * | 1,4 | **G 06 K 7/14** |
| A | US-A-3 900 832 (TAPLIN BUSINESS MACHINES) * Figures 1-4; colonne 1, lignes 53-62; colonne 2, ligne 31 - colonne 5, ligne 26 * | 1,4 | |
| A | EP-A-0 081 316 (BURROUGHS) * Figures 1,2D; page 2, ligne 16 - page 3, ligne 20; page 5, ligne 1 - page 8, ligne 11; page 12, lignes 19-26 * | 1,4 | |
| A | US-A-4 092 525 (E-SYSTEMS) * Figures 1-4B; colonne 1, lignes 30-48; colonne 1, ligne 65 - colonne 2, ligne 6; colonne 2, ligne 49 - colonne 4, ligne 46 * | 1,4 | DOMAINES TECHNIQUES RECHERCHES (Int. Cl.4) **G 06 K** |
| A | US-A-4 351 004 (TEXAS) * Résumé * | 9,10 | |
| A | US-E- 29 449 (INCOTERM) | | |

Le présent rapport de recherche a été établi pour toutes les revendications

| Lieu de la recherche | Date d'achèvement de la recherche | Examinateur |
|---|---|---|
| LA HAYE | 13-11-1986 | FORLEN |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82